# EUROPEAN PATENT APPLICATION

(11) **EP 1 630 087 A1**
(43) Date of publication of application: **01.03.2006**
(21) Application number: 05291746.5
(22) Date of filing: 18.08.2005
(51) Int. Cl.: B62K 19/46, B62J 13/02, B62M 9/16

(54) **Bicycle power supply mounting apparatus**

(30) Priority: 26.08.2004 JP 2004246882
(71) Applicant: SHIMANO INC., Osaka 590-8577 (JP)
(72) Inventor: Nishimoto, Naohiro, Wakayama, 648-0092 (JP)
(74) Representative: Intes, Didier Gérard André

(57) **Abstract**

A bicycle power supply mounting apparatus comprises a power supply mounting unit (32) and a chain drop inhibiting unit (33). The power supply mounting unit (32) is structured to be attached to a frame (102) of a bicycle (101). The chain drop inhibiting unit (33) extends from the power supply mounting unit (32) and is dimensioned to be located in close proximity to a sprocket (172) in order to inhibit dropping of the chain (95) from the sprocket (172).

## Description

### BACKGROUND OF THE INVENTION

The present invention is directed to bicycles and, more particularly, to a bicycle power supply mounting apparatus.

Bicycles sometimes are equipped with various electrical devices that are distributed along the bicycle frame and are interconnected through appropriate wiring. Such a bicycle is disclosed in U.S. Patent No. 6,835,069. For example, a motorized front transmission may be mounted to a middle portion of the bicycle frame, a motorized rear transmission may be mounted to a rear portion of the bicycle frame, and shift control devices in the form of electrical switches used to control the front and rear tranmissions may be mounted on opposite sides of the handlebar. A power supply usually is mounted somewhere on the frame to supply electrical power to the various electrical components.

A typical bicycle includes a front sprocket assembly and a rear sprocket assembly, wherein the front sprocket assembly comprises a plurality of front sprockets mounted for rotation with the pedal crank, and the rear sprocket assembly comprises a plurality of rear sprockets mounted for rotation with the rear wheel. A motorized front derailleur is used to switch a chain among the plurality of front sprockets, and a motorized rear derailleur is used to switch the chain among the plurality of rear sprockets. Sometimes the chain drops off of the front sprocket assembly when the front derailleur attempts to shift the chain to the smallest front sprocket. Accordingly, a chain drop inhibiting member sometimes is mounted to the frame in close proximity to the smallest front sprocket to inhibit such chain drops.

It can take a substantial amount of time to mount all of the various components to the bicycle frame. Furthermore, as the number of components increases, it becomes difficult to find suitable mounting locations for all of the components. That is especially the case when one component is mounted on the bicycle in the same place that is needed for mounting another component. For example, it may be desirable to mount a power supply for electrical components in the same vicinity that it is desirable to mount a chain drop inhibiting member, but it may be impossible to mount both units as desired.

### SUMMARY OF THE INVENTION

The present invention is directed to various features of a bicycle power supply mounting apparatus. In one embodiment, a bicycle power supply mounting apparatus is provided for mounting in close proximity to a sprocket that engages a chain, wherein the sprocket is mounted to a pedal crank. The apparatus comprises a power supply mounting unit and a chain drop inhibiting unit, wherein the power supply mounting unit is structured to be attached to a frame of a bicycle. The chain drop inhibiting unit extends from the power supply mounting unit and is dimensioned to be located in close proximity to the sprocket in order to inhibit dropping of the chain from the sprocket. Additional inventive features will become apparent from the description below, and such features alone or in combination with the above features may form the basis of further inventions as recited in the claims and their equivalents.

### BRIEF DESCRIPTION OF THE DRAWINGS

Fig. 1 is a side view of a particular embodiment of a bicycle;

Fig. 2 is a cross sectional view of particular embodiments of pedal crank components mounted to the bottom bracket of the bicycle;

Fig. 3 is a front view of a particular embodiment of components mounted to the bicycle handlebar;

Fig. 4 is a side view of electrical wiring mounted to the bicycle frame;

Fig. 5 is a block diagram of a particular embodiment of an electrically operated bicycle control system;

Fig. 6 is a front view of a particular embodiment of a first cover member;

Fig. 7 is a view taken along line VII-VII in Fig. 6;

Fig. 8 is a front view of a particular embodiment of a second cover member;

Fig. 9 is a partial cross-sectional view of the second cover member;

Fig. 10 is a partial cross sectional view of another embodiment of a second cover member;

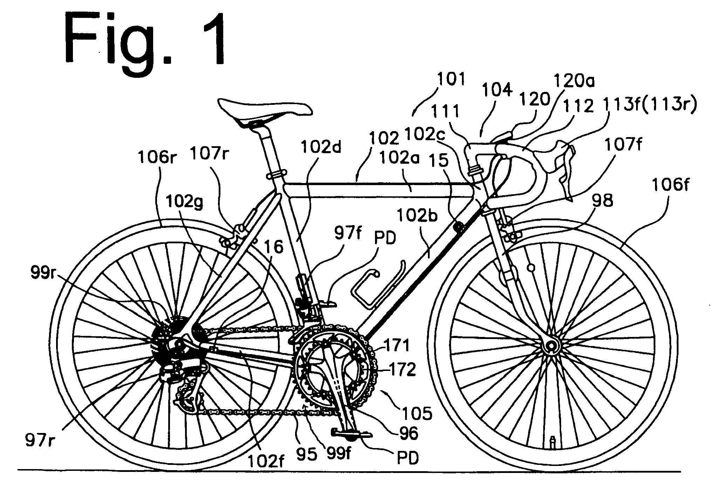

Fig. 1 1 is a cross sectional view of a particular embodiment of a coupler;

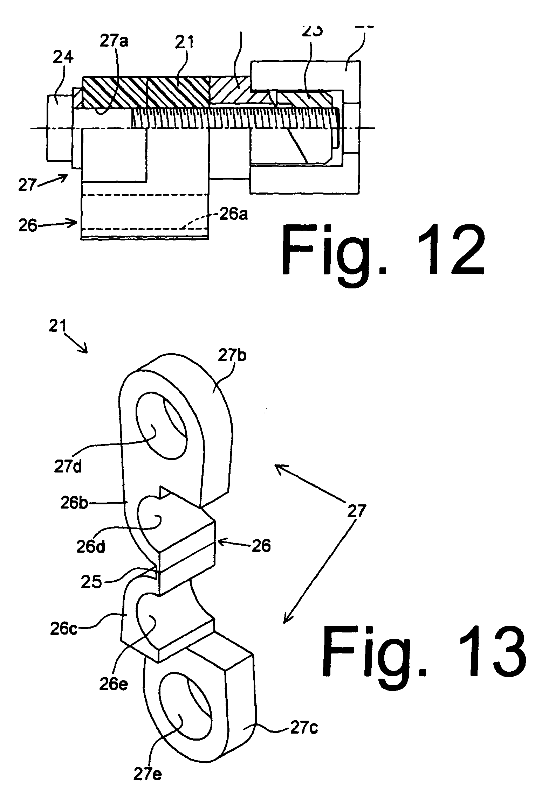

Fig. 12 is a cross sectional view of another embodiment of a coupler;

Fig. 13 is an oblique view of the support member shown in Fig. 12

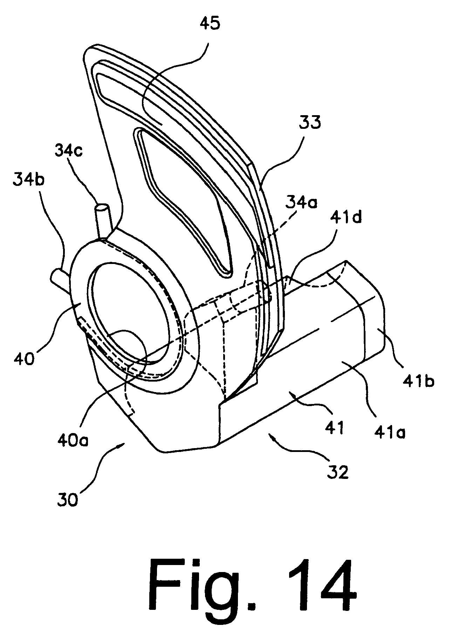

Fig. 14 is a perspective view of a particular embodiment of a bicycle power supply mounting apparatus;

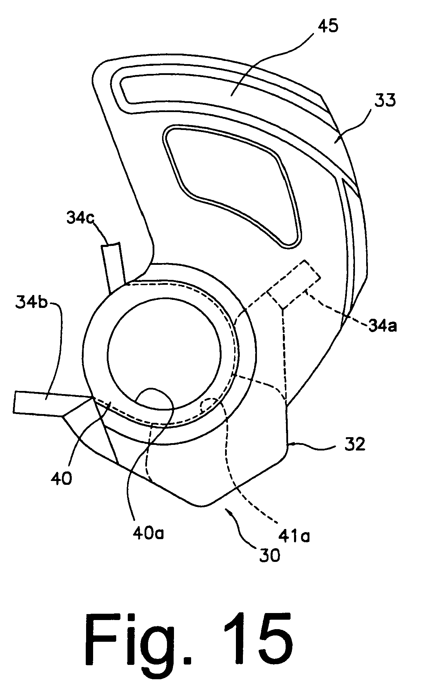

Fig. 15 is a side view of the bicycle power supply mounting apparatus; and

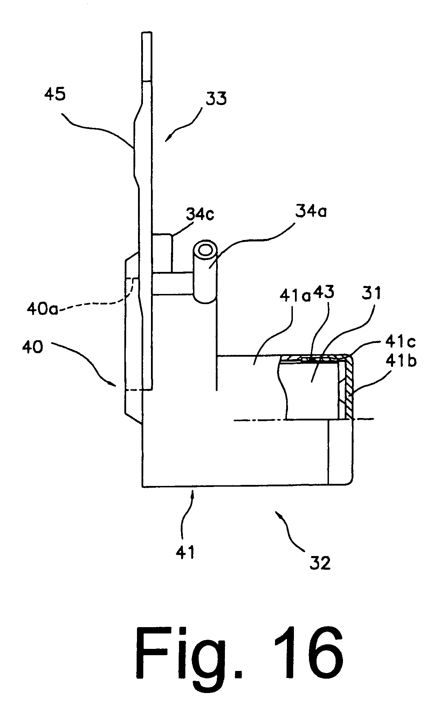

Fig. 16 is a front view of the bicycle power supply mounting apparatus.

### DETAILED DESCRIPTION OF THE EMBODIMENTS

Fig. I is a side view of a bicycle 101 that includes particular embodiments of electrically controlled components. Bicycle 101 is a road bicycle comprising a diamond-shaped frame 102, a front fork 98 rotatably mounted to frame 102, a handlebar assembly 104 mounted to the upper part of fork 98, a front wheel 106f rotatably attached to the lower part of fork 98, a rear wheel 106r rotatably attached to the rear of frame 102, and a drive unit 105. A front wheel brake 107f is provided for braking front wheel 106f, and a rear wheel brake 107r is provided for braking rear wheel 106r.

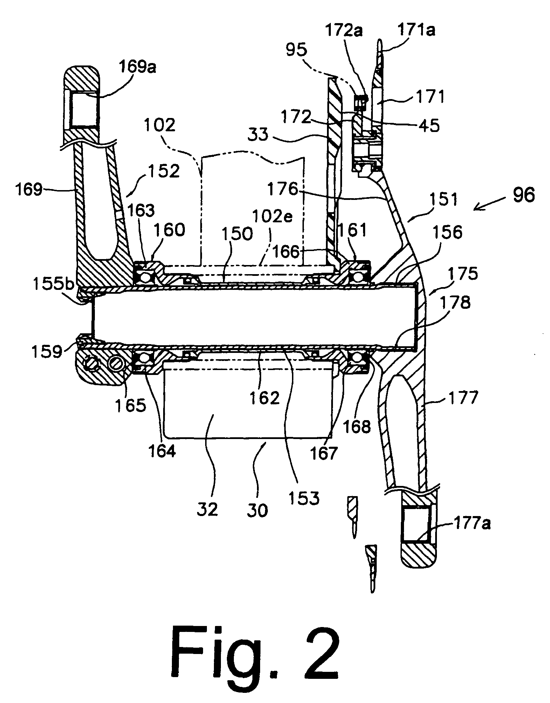

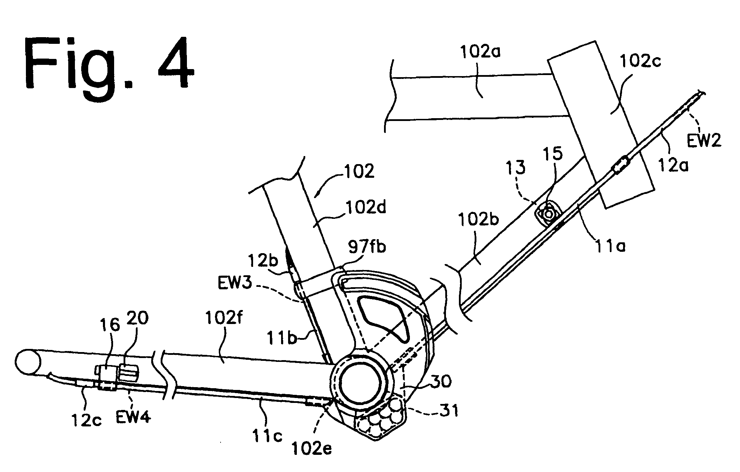

Frame 102 comprises a head tube 102c that rotatably supports front fork 98, a top tube 102a that extends horizontally from head tube 102c, a down tube 102b that extends downwardly at an incline from head tube 102c, a vertically inclined seat tube 102d joined to the rear end of top tube 102a, a bottom bracket 102e (Figs. 2 and 4) that joins the bottom ends of down tube 102b and seat tube 102d, a pair of chainstays 102f that extend rearwardly from bottom bracket 102e on opposite sides of rear wheel 106r, and a pair if seatstays 102g that extend downwardly at an incline from the upper portion of seat tube 102d on opposite sides of rear wheel 106r. The rear ends of chainstays 102f and seatstays 102g are joined together to mount rear wheel 106r.

Drive unit 105 comprises a chain 95, a front sprocket assembly 99f coaxially mounted with a crank assembly 96, an electrically controlled front derailleur 97f attached to seat tube 102d, a rear sprocket assembly 99r coaxially mounted with rear wheel 106r, and an electrically controlled rear derailleur 97r. In this embodiment, front sprocket assembly 99f comprises two front sprockets 171 and 172 with sprocket teeth 171 a (Fig. 2) and 172a, respectively, wherein the number of sprocket teeth 172a is less than the number of sprocket teeth 171a and a diameter of front sprocket 172 is less than a diameter of front sprocket 171. Rear sprocket assembly 99r may comprise ten sprockets mounted coaxially with rear wheel 106r. Front derailleur 97f moves to two operating positions to switch chain 95 between front sprockets 171 and 172, and rear derailleur 97r moves to ten operating positions to switch chain 95 among selected ones of the ten rear sprockets.

As shown in Fig. 2, crank assembly 96 comprises a bottom bracket set 150, a right crank unit 151 and a left crank unit 152. Bottom bracket set 150 comprises an axle 153, a left bearing assembly 160, a right bearing assembly 161 and a tubular axle housing 162. Left bearing assembly 160 comprises a left bearing housing 163 that screws into the left side of bottom bracket 102e, a left cartridge bearing 164 that fits inside left bearing housing 163, and a left dust cover 165 that covers the outside of left cartridge bearing 163. Similarly, right bearing assembly 161 comprises a right bearing housing 166 that screws into the right side of bottom bracket 102e, a right cartridge bearing 167 that fits inside right bearing housing 166, and a right dust cover 168 that covers the outside of right cartridge bearing 167. Axle housing 162 is fitted between left bearing housing 163 and right bearing housing 166. Axle 153 is rotatably supported within axle housing 162 by left cartridge bearing 164 and right cartridge bearing 167.

Axle 153 is a hollow pipe-shaped member made of a highly rigid alloy such as chrome molybdenum steel. A left crank arm 169 is mounted to the left side of axle 153 by a bolt 159 that screws into a threaded inner peripheral surface 155b of axle 153. A right crank arm 177 is mounted to the right side of axle 153 by fitting an expanded portion 156 of axle 153 into a recess 178 formed in a crank axle mounting boss 175 of right crank arm 177. Five sprocket mounting arms 176 extend radially outwardly from crank axle mounting boss 175, and sprockets 171 and 172 are mounted to the ends of sprocket mounting arms 176 in an axially spaced manner. Pedals PD (Fig. 1) are mounted in threaded openings 169a and 177a in crank arms 169 and 177, respectively.

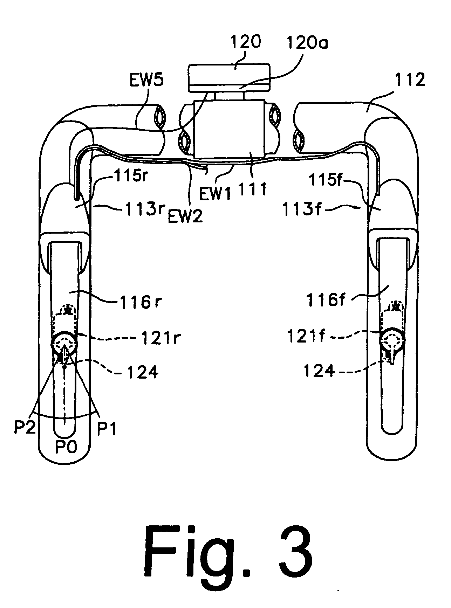

As shown in Figs. 1 and 3, handlebar assembly 104 comprises a handlebar stem 11 and a drop-style handlebar 112, wherein handlebar stem 111 is mounted to the upper part of fork 98, and handlebar 112 is mounted to the forward end portion of handlebar stem 111. Brake lever assemblies 113f and 113r are mounted at opposite sides of handlebar 112. Brake lever assembly 113f controls the operation of front wheel brake 107f, and brake lever assembly 113r controls the operation of rear wheel brake 107r. A display unit 120 is detachably mounted to a display bracket 120a attached to a central portion of handlebar 112. Display unit 120 displays the speed of the bicycle, distance traveled, gear position, etc. in a known manner.

Brake lever assemblies 113f and 113r comprise respective brake brackets 115f and 115r mounted to the forward curved portions of handlebar 112, and respective brake levers 116f and 116r pivotably mounted to brake brackets 115f and 115r. A rear shift control device 121 r with a switch lever 124 is mounted to the rear side of brake lever 116r so that the rider may control the operation of rear derailleur 97r with the hand grasping brake lever 116r. The switch lever 124 mounted to the rear of brake lever 116r rotates laterally inward from a home position P0 to a first position P1 and rotates laterally outward from home position P0 to a second position P2 to control the operation of rear derailleur 97r. Similarly, a front shift control device 121 f with a switch lever 124 is mounted to the rear side of brake lever 116f so that the rider may control the operation of front derailleur 97f with the hand grasping brake lever 116f. The switch lever 124 mounted to the rear of brake lever 116f also rotates laterally inward from a home position P0 to a first position P1 and rotates laterally outward from home position P0 to a second position P2 to control the operation of front derailleur 97f. The levers 124 in front shift control device 121f and rear shift control device 121 r are biased to their respective home positions P0.

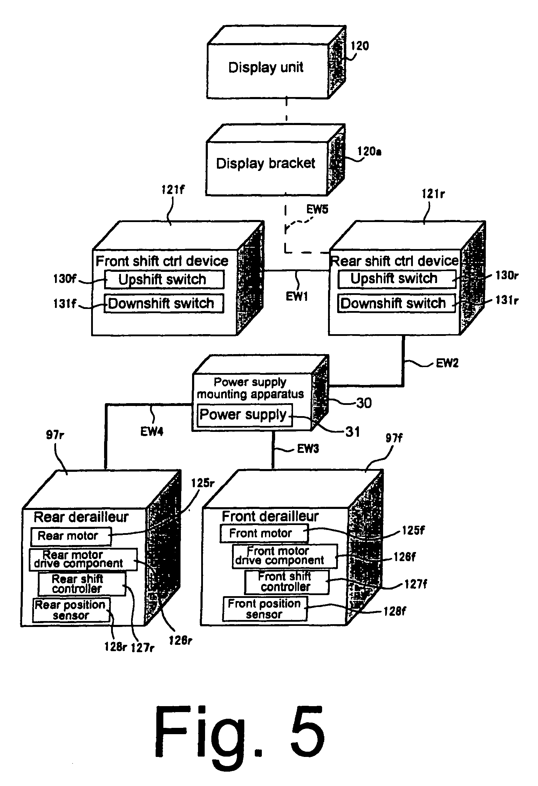

A front upshift switch 130f (Fig. 5) and a front downshift switch 131f are mounted in front shift control device 121f. Front upshift switch 130f operates when switch lever 124 in front shift control device 121f rotates from position P0 to position P1, and front downshift switch 131 f operates when switch lever 124 in front shift control device 121 f rotates from position P0 to position P2. Similarly, a rear upshift switch 130r and a rear downshift switch 131 r are mounted in rear shift control device 121r. Rear upshift switch 130r operates when switch lever 124 in rear shift control device 121r rotates from position P0 to position P1, and rear downshift switch 131r operates when switch lever 124 in rear shift control device 121 r rotates from position P0 to position P2. Of course, many different switch combinations that operate in many different ways may be provided to suit different applications.

As shown in Fig. 5, front derailleur 97f comprises a front derailleur motor 125f, a front motor drive component 126f for driving front derailleur motor 125f, a front shift controller 127f comprising a programmed microprocessor and other electronic components for controlling the position of front derailleur 97f in response to signals received from front shift control device 121 f, and a front position sensor 128f that senses the operating position of front derailleur 97f. Similarly, rear derailleur 97r comprises a rear derailleur motor 125r, a rear motor drive component 126r for driving rear derailleur motor 125r, a rear shift controller 127r comprising a programmed microprocessor and other electronic components for controlling the positioning of rear derailleur 97r in response to signals received from rear shift control device 121r, and a rear position sensor 128r that senses the operating position of rear derailleur 97r. A power supply 31 in the form of a primary or secondary battery or some other power source is housed in a power supply mounting apparatus 30 attached to bottom bracket 102b by right bearing housing 166 as shown in Fig. 2. Power supply 31 powers front and rear derailleurs 97f and 97r as well as other electrical components described herein in a known manner.

As shown in Figs. 1, 3, 4 and 5, front and rear derailleurs 97f and 97r, front and rear shift control devices 121f and 121 r, display unit 120 and power supply mounting apparatus 30 are mounted at various positions on bicycle 101 and are interconnected by five sets of electrical wiring EW1 - EW5. Electrical wiring EW 1 extends from front shift control device 121f to rear shift control device 121r, electrical wiring EW2 extends from rear shift control device 121 r to power supply mounting apparatus 30, electrical wiring EW3 extends from power supply mounting apparatus 30 to front derailleur 97f, electrical wiring EW4 extends from power supply mounting apparatus 30 to rear derailleur 97r, and electrical wiring EW5 extends from rear shift control device 121 r to display unit bracket 120a.

In this embodiment, electrical wiring EW 1 carries shift control signals from front shift control device 121f and may comprise a three wire cable that may be partially taped to handlebar 112. Electrical wiring EW2 carries shift control signals from front shift control device 121 f and rear shift control device 121r as well as the operating position signals from front position sensor 128f and rear position sensor 128r. Electrical wiring EW2 may comprise a five or six wire cable. The portion of electrical wiring EW2 in proximity to rear brake lever assembly 113r may be partially taped to handlebar 112. Electrical wiring EW3 carries shift control signals from front shift control device 121 f and front derailleur position signals from front position sensor 128f. Similarly, electrical wiring EW4 carries shift control signals from rear shift control device 121 r and rear derailleur position signals from rear position sensor 128r. Each electrical wiring EW3 and EW4 may comprise a four wire cable. Electrical wiring EW5 carries front and rear derailleur position signals from front and rear position sensors 128f and 128r. Electrical wiring EW5 may comprise a five or six wire cable that may be partially taped to handlebar 112. Display unit 120 uses the signals received on electrical wiring EW5 to display the current operating position of front derailleur 97f and rear derailleur 97r to the rider.

As shown in Fig. 4, in this embodiment electrical wiring EW2 is supported to down tube 102b by a straight rigid first cover member 11a, a flexible and relatively soft second cover member 12a and a first coupler 15, wherein a lower end portion of first cover member 11a is inserted into power supply mounting apparatus 30 in a manner described below. Electrical wiring EW3 is supported to seat tube 102d by a straight rigid first cover member 11 b, a flexible and relatively soft second cover member 12b, and a front derailleur bracket 97fb, wherein a lower end portion of first cover member 11b is inserted into power supply mounting apparatus 30. Electrical wiring EW4 is supported to a chain stay 102f by a straight rigid first cover member 11c, a flexible and relatively soft second cover member 12c, and a second coupler 16, wherein a forward end portion of first cover member 11 c is inserted into power supply mounting apparatus 30.

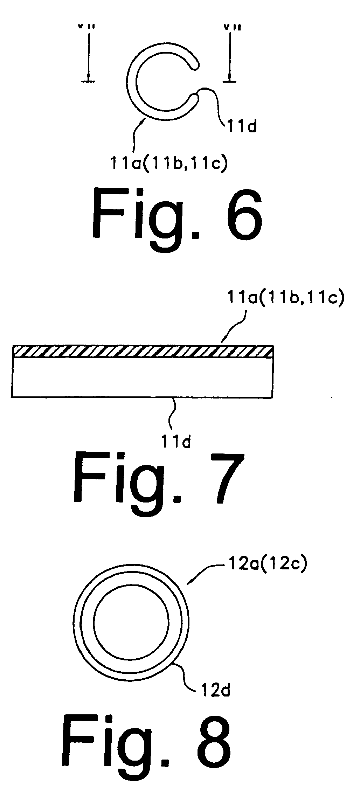

First cover members 11a-11c, which function as electrical wire covers, may be fabricated from a hard, relatively resilient, break-resistant material such as polyacetal resin. As shown in Figs. 6 and 7, each first cover member 11a-11c has a generally cylindrical tubular shape and has a slot 11d extending along its entire length. As a result, each first cover member 11a-11c has a substantially C-shaped cross-section. Electrical wiring EW2-EW4 are supported within and substantially covered by their respective first cover members 11a-11c.

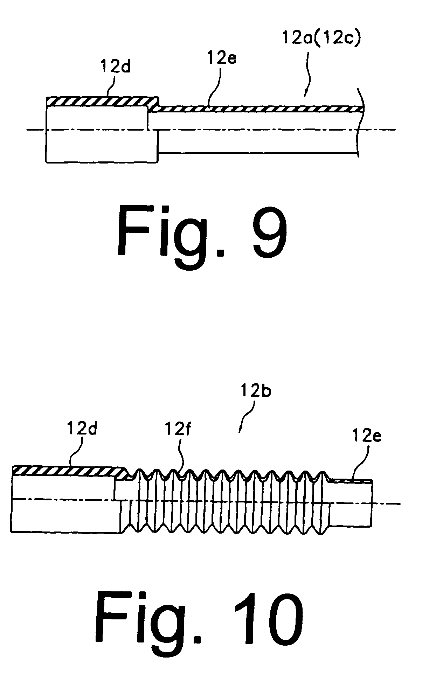

Each second cover member 12a-12c may be fabricated from a flexible and soft material such as a rubber synthetic resin. In this embodiment, second cover members 12a and 12c have the same construction. As shown in Figs. 8 and 9, each second cover member 12a and 12c comprises a substantially cylindrical tubular attachment part 12d and a substantially cylindrical tubular extension part 12e. Attachment part 12d is structured to elastically attach around an end of its corresponding first cover member 11a and 11c, and extension part 12e extends from attachment part 12d. A diameter of extension part 12e is less than a diameter of attachment part 12d. Electrical wiring EW2 and EW4 are supported within and covered by their respective second cover members 12a and 12c.

Second cover member 12b also may be fabricated from a flexible and soft material, but it has a slightly different shape than second cover members 12a and 12c. As shown in Fig. 10, second cover member 12b comprises a substantially cylindrical tubular attachment part 12d and a substantially cylindrical tubular extension part 12e, wherein a diameter of extension part 12e is less than a diameter of attachment part 12d as in the first embodiment. However, in this embodiment, an undulating extension part 12f extends from attachment part 12d between attachment part 12d and extension part 12e. Electrical wiring EW3 is supported within and covered by second cover member 12b.

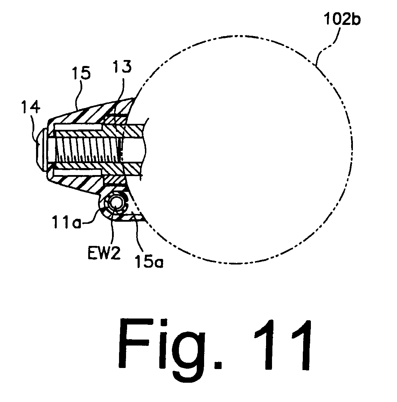

As shown in Fig. 4, the upper portion of first cover member 11a, which covers electrical wire assembly EW2, is attached to down tube 102c by first coupler 15. As shown in Fig. 11, first coupler 15 is attached to down tube 102b by a fastening bolt 14 that mates with a fastening nut 13 that extends through down tube 102b. First coupler 15 has the shape of a truncated square pyramid that widens towards the base, wherein the bottom surface of the base follows the curved surface of down tube 102b. First coupler 15 has a hollow portion that houses fastening nut 13 therein. A U-shaped attachment portion 15a is disposed at the bottom of first coupler 15 and elastically engages first cover member 15a.

As shown in Fig. 4, the rear portion of first cover member 11c, which covers electrical wiring EW4, is attached to chain stay 102f by second coupler 16. Second coupler 16 is detachably fitted in a cable terminating component 20 ordinarily used for terminating the outer casing of a conventional Bowden cable. As shown in Fig. 12, second coupler 16 comprises a support member 21 for supporting first cover member 11c, a resilient taper ring 22 for attaching support member 21 to cable terminating component 20, a taper nut 23 that contacts the tapered surface of taper ring 22, and a fastener bolt 24. Fastener bolt 24 passes through support member 21 and taper ring 22 and screws into taper nut 23. When fastener bolt 24 is screwed into taper nut 23, taper ring 22 expands radially outward to secure second coupler 16 to cable terminating component 20, thereby attaching first cover member 11 c to chain stay 102f.

Support member 21 may be fabricated from a relatively soft synthetic resin such as polypropylene, for example, that is folded to produce the structure shown in Fig. 12. Fig. 13 shows support member 21 in its unfolded state. As shown in Figs. 12 and 13, support member 21 comprises a central folding portion 25, a first portion 26 that forms a first cover member opening 26a, and a second portion 27 that forms a fastener opening 27a for receiving fastener bolt 24 therethrough. In this embodiment, a diameter of first cover member opening 26a is less than a diameter of first fastener opening 27a. Also, the diameter of first cover member opening 26a is slightly smaller than a diameter of first cover member 11c to firmly hold first cover member 11c.

First portion 26 comprises a first segment 26b and a second segment 26c, wherein first segment 26b folds relative to second segment 26c about central folding portion 25 to form first cover member opening 26a. First and second segments 26b and 26c have respective first and second concave surfaces 26d and 26e that face each other when support member 21 is in the folded state to form first cover member opening 26a. Second portion 27 comprises a first segment 27b and a second segment 27c, wherein first segment 27b folds relative to second segment 27c about central folding portion 25 to form first fastener opening 27a. First and second segments 27b and 27c have respective circular openings 27d and 27e formed therein. First and second segments 27b and 27c are disposed axially adjacent to each other when support member 21 is in the folded state so that openings 27d and 27e are aligned with each other to form first fastener opening 27a.

As noted above, power supply mounting apparatus 30 is mounted to bottom bracket 102e through right bearing housing 166 as shown in Fig. 2. As shown in Figs. 14-16, battery case 30 comprises a power supply mounting unit 32 and a chain drop inhibiting unit 33 that is integrally formed (e.g., formed as one piece) with power supply mounting init 32. Power supply mounting unit 32 is structured to be attached to bottom bracket 102e, and chain drop inhibiting unit 33 extends generally perpendicularly upwardly from power supply mounting unit 32. Chain drop inhibiting unit 33 is dimensioned to be located in close proximity to sprocket teeth 172a of front sprocket 172 in order to inhibit dropping of chain 95 from sprocket 172 when front derailleur 97f switches chain 95 from sprocket 171 to sprocket 172.

Power supply mounting unit 32 comprises an attachment member 40 and a power supply housing 41. Attachment member 40 is a plate-shaped member with an axle opening 40a dimensioned to receive axle 153 and right bearing housing 166 therethrough so that attachment member 40 may be sandwiched between the right edge of bottom bracket 102e and right bearing housing 166, thereby mounting power supply mounting apparatus 30 to frame 102.

Power supply housing 41 is dimensioned to house power supply 31 within it, and it is dimensioned to be located in close proximity to a lower portion of bottom bracket 102e. More specifically, power supply housing 41 comprises a case 41a having an opening 41c (Fig. 16) dimensioned to receive power supply 31 therein, a cover 41 b that covers opening 41 c in a resiliently detachable manner, and a seal 43 disposed between case 41 a and cover 41b to prevent contaminants from entering power supply housing 41. Case 41a has a curved surface 41d for engaging the outer peripheral curved surface of bottom bracket 102e.

Tubular wire passages 34a-34c that are in fluid communication with the interior of case 41a are disposed on power supply housing 32. When power supply mounting apparatus 30 is mounted to bottom bracket 102e, wire passage 34a extends forwardly and upwardly at an incline substantially parallel in close proximity to down tube 102b, wire passage 34b extends rearwardly with a slight upward incline substantially parallel in close proximity to chainstay 102f, and wire passage 34c extends rearwardly and upwardly at an incline substantially parallel in close proximity to seat tube 102d. First cover member 11a may be inserted into wire passage 34a so that electrical wiring EW2 may pass into case 41a, first cover member 11b may be inserted into wire passage 34b so that electrical wiring EW4 may pass into case 41 a, and first cover member 1 1c may be inserted into wire passage 34c so that electrical wiring EW3 may pass into case 41a.

Chain drop inhibiting unit 33 is a plate-shaped member that extends from power supply mounting unit 32 so as to face sprocket teeth 172a of front sprocket 172 when power supply mounting unit 32 is mounted to bottom bracket 102e. More specifically, chain drop inhibiting unit 33 includes a chain drop inhibiting lug 45 that extends laterally from a side surface of chain drop inhibiting unit 32 toward front sprocket 172. Chain drop inhibiting lug 45 is curved in a rotational direction of sprocket 172 with approximately the same radius of curvature (e.g., slightly less) than sprocket teeth 172a. Preferably, a space between chain drop inhibiting lug 45 and a side of front sprocket 172 is smaller than a width of chain 95 as shown in Fig. 2.

Power supply apparatus 30 is attached to frame 102 as follows. First, axle 153, which previously was attached to right crank arm 177, is inserted through right bearing housing 166 and right cartridge bearing 167, right bearing housing 166 is inserted through axle opening 40a in attachment member 40 of power supply mounting apparatus 30, and axle housing 162 is mounted on right bearing housing 166. Axle 153 and axle housing 162 are inserted through bottom bracket 102e from the right side in Fig. 2, and right bearing housing 166 is screwed into the threaded inner peripheral surface at the right side of bottom bracket 102e. Chain drop inhibiting unit 33 is oriented upwardly, and then right bearing housing 166 is tightened to bottom bracket 102e. This fixes power supply mounting apparatus 30 to bottom bracket 102e. Left bearing housing 163 and cartridge bearing 164 are mounted over axle 153, and left bearing housing 163 is screwed into the threaded inner peripheral surface at the left side of bottom bracket 102e and tightened. This rotatably mounts axle 153 in bottom bracket 102e. Finally, left crank 152 is attached to the left side of axle 153 using bolt 159.

Since chain drop inhibiting unit 33 extends from power supply mounting unit 32, chain drop inhibiting unit 33 can be mounted on frame 102 simply by mounting power supply mounting apparatus 30 to bottom bracket 102e. It is not necessary to separately mount power supply mounting unit 32 and chain drop inhibiting unit 33, thereby reducing the amount of time needed to mount components on the bicycle. Also, power supply mounting unit 32 and chain drop inhibiting unit 33 do not interfere with each other during mounting, and the combined structure does not take up excessive mounting space on frame 102. Since the size of bottom brackets is standardized in the industry, power supply mounting apparatus 30 may be mounted to many different frames without having to specifically accommodate different frame configurations. Furthermore, since attachment member 40 can be fixed by using the existing mounting mechanism for bottom bracket set 150, power supply mounting apparatus 30 can be attached without using a dedicated attachment member. This further reduces the cost of assembly.

During operation of the bicycle, when front derailleur 97f is in the low-speed position, operating front shift control device 121f to turn on front upshift switch 130f causes an upshift signal to be communicated to power supply mounting apparatus 30 through electrical wiring EW 1 and EW2 and then to front derailleur 97f through electrical wiring EW3. Front shift controller 127f then provides signals to front derailleur motor drive component 126f to drive front derailleur motor 125f to move front derailleur 97f to the high speed position. Similarly, when front derailleur 97f is in the high-speed position, operating front shift control device 121 f to turn on front downshift switch 131 f causes a downshift signal to be communicated to front derailleur 97f through electrical wiring EW2 and EW3. Front shift controller 127f then provides signals to front derailleur motor drive component 126f to drive front derailleur motor 125f to move front derailleur 97f to the low speed position. During the downshift operation, chain 95 may tend to drop further to the inside of front sprocket 172. However, since the chain drop inhibiting unit 33 is positioned near the side of front sprocket 172, such a chain drop is unlikely to occur.

When rear derailleur 97r is in a lower-speed position, operating rear shift control device 121 r to turn on rear upshift switch 130r causes an upshift signal to be communicated to power supply mounting apparatus 30 through electrical wiring EW2 and then to rear derailleur 97f through electrical wiring EW4. Rear shift controller 127r then provides signals to rear derailleur motor drive component 126r to drive rear derailleur motor 125r to move rear derailleur 97r to a higher speed position. Similarly, when rear derailleur 97r is in a higher speed position, operating rear shift control device 121 r to turn on rear downshift switch 131 r causes a downshift signal to be communicated to rear derailleur 97r through electrical wiring EW2 and EW4. Rear shift controller 127r then provides signals to rear derailleur motor drive component 126r to drive rear derailleur motor 125r to move rear derailleur 97r to a lower speed position.

During the above operations, operating position signals from front and rear position sensors 128f and 128r are communicated to display unit 120 through electrical wiring EW2-EW5 as appropriate, and display unit 120 displays the current operating positions of front and rear derailleurs 97f and 97r.

While the above is a description of various embodiments of inventive features, further modifications may be employed without departing from the spirit and scope of the present invention. While power supply mounting apparatus 30 in the disclosed embodiment was mounted directly to bottom bracket 102e, power supply mounting apparatus 30 may be mounted at any place on frame 102 as long as chain drop inhibiting unit 33 faces front sprocket 172. For example, power supply mounting apparatus 30 may be mounted on down tube 102b or seat tube 102d. While power supply mounting unit 32 and chain drop inhibiting unit 33 were formed as one piece, chain drop inhibiting unit 33 may be mounted separately on power supply mounting unit 32. The size, shape, location or orientation of the various components may be changed as desired. Components that are shown directly connected or contacting each other may have intermediate structures disposed between them. The functions of one element may be performed by two, and vice versa. The structures and functions of one embodiment may be adopted in another embodiment. It is not necessary for all advantages to be present in a particular embodiment at the same time. Every feature that is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus or emphasis on a particular structure or feature.

## Claims

1. A bicycle power supply mounting apparatus (30) **characterized in that** said apparatus is mountable in close proximity to a first sprocket that engages a chain (95), and that the first sprocket (172) is mounted to a pedal crank (96) and the apparatus comprises:
a power supply mounting unit (32) structured to be attached to a frame (102) of a bicycle (101); and
a chain drop inhibiting unit (33) extending from the power supply mounting unit and dimensioned to be located in close proximity to the first sprocket (172) in order to inhibit dropping of the chain (95) from the first sprocket (172).

2. The apparatus according to claim 1 **characterized in that** the first sprocket (172) includes a plurality of first sprocket teeth (172a) for engaging the chain (95), and wherein the chain drop inhibiting unit (33) is dimensioned to be located in close proximity to the plurality of first sprocket teeth (172a) in order to inhibit dropping of the chain (95) from the first sprocket (172).

3. The apparatus according to either of claims 2 or 3 **characterized in that** a second sprocket (171) is mounted to the pedal crank (96), and that the second sprocket (171) has a plurality of second sprocket teeth (171a) for engaging the chain (95), and that a number of first sprocket teeth (172a) is less than a number of second sprocket teeth (171a).

4. The apparatus according to anyone of the preceding claims **characterized in that** the chain drop inhibiting unit (33) is formed integrally with the power supply mounting unit (32).

5. The apparatus according to anyone of the preceding claims **characterized in that** the power supply mounting unit (32) includes an axle opening (40a) dimensioned for receiving a pedal crank axle (153) therethrough.

6. The apparatus according to anyone of the preceding claims **characterized in that** the chain drop inhibiting unit (33) includes a chain drop inhibiting lug that extends laterally from a side surface of the chain drop inhibiting unit (33) toward the first sprocket (172).

7. The apparatus according to claim 6 **characterized in that** the chain drop inhibiting lug is curved in a rotational direction of the first sprocket (172).

8. The apparatus according to anyone of the preceding claims, **characterized in that** the power supply mounting unit (32) comprises a power supply housing (41) dimensioned to house the power supply within it.

9. The apparatus according to claim 8 **characterized in that** the power supply housing (41) comprises:
a case (41b) having an opening dimensioned to receive the power supply therein; and
a cover (11 b) that covers the opening.

10. The apparatus according to either of claims 8 or 9 **characterized in that** the power supply housing (41) is dimensioned to be located in close proximity to a bottom bracket (102e) of a frame (102) of the bicycle (101).

11. The apparatus according to claim 10 **characterized in that** the power supply housing (41) is dimensioned to be located at a lower portion of the bottom bracket (102e).

12. The apparatus according to either of claims 10 or 11 **characterized in that** the power supply housing (41) has a curved surface (41d) for engaging a curved surface of the bottom bracket (102e).

13. The apparatus according to anyone of claims 8 to 12 **characterized in that** said apparatus further comprises a first wire passage (34a) dimensioned to pass wiring (EW) into the power supply housing (41).

14. The apparatus according to claim 13 **characterized in that** the first wire passage (34a) extends outwardly from the power supply housing (41).

15. The apparatus according to either of claims 13 or 14 **characterized in that** the first wire passage (34a) comprises a tubular member.

16. The apparatus according to either of claims 14 or 15 **characterized in that** the first wire passage (34a) extends rearwardly.

17. The apparatus according to anyone of claims 13 to 16 **characterized in that** the first wire passage (34a) is positioned to extend substantially parallel to a chain stay (102f) of the bicycle (101) when the apparatus is mounted to the bicycle (101).

18. The apparatus according to anyone of claims 13, 14, 15 or 17 **characterized in that** the first wire passage (34a) extends forwardly.

19. The apparatus according to anyone of claims 13 to 18 **characterized in that** the first wire passage (34a) is positioned to extend substantially parallel to a down tube (102b) of the bicycle (101) when the apparatus is mounted to the bicycle (101).

20. The apparatus according to claim 16 further **characterized in that** a second wire passage (34b) is dimensioned to pass wiring into the power supply housing (41), and that the second wire passage (34b) extends outwardly from the power supply housing (41).

21. The apparatus according to claim 20 **characterized in that** the first wire passage (34a) extends rearwardly, and that the second wire passage (34b) extends upwardly.

22. The apparatus according to claim 21 **characterized in that** the first wire passage (34a) is positioned to extend substantially parallel to a chain stay (102f) of a bicycle (101) when the apparatus is mounted to the bicycle (101).

23. The apparatus according to anyone of claims 20 to 22 **characterized in that** the second wire passage (34b) is positioned to extend substantially parallel to a down tube (102b) of a bicycle (101) when the apparatus is mounted to the bicycle (101).

24. The apparatus according to anyone of claims 20 to 23 **characterized in that** the first wire passage (34a) comprises a first tubular member, and that the second wire passage (34b) comprises a second tubular member.
